# EUROPÄISCHE PATENTANMELDUNG

(11) **EP 1 618 938 A1**
(43) Veröffentlichungstag der Anmeldung: **25.01.2006**
(21) Anmeldenummer: 05010946.1
(22) Anmeldetag: 20.05.2005
(51) Int. Cl.: B01D 39/16, B01D 39/20

(54) **Filteranordnung**

(30) Priorität: 23.07.2004 DE 102004035967
(71) Anmelder: Carl Freudenberg KG, 69469 Weinheim (DE)
(72) Erfinder: Bräunling, Volker, 64646 Heppenheim (DE); Stahl, Ulrich, 69514 Laudenbach (DE); Felber, Uwe, 69518 Absteinach (DE); Schacht, Heiko, 69493 Hirschberg (DE); Bader, Robert, 69117 Heidelberg (DE)

(57) **Zusammenfassung**

Es wird eine Filteranordnung, insbesondere zur Filterung der Autoinnenraum-Zuluft, beschrieben, umfassend wenigstens einen partikelfilternden Bereich und wenigstens einen chemischen Filterbereich, wobei der chemische Filterbereich einen Aktivkohlefilter umfasst. Gemäß der Erfindung weist der partikelfilternde Bereich eine Filtereffizienz von T(0,3 µm) ≥ 90 %, gemessen nach DIN 71460/1 @ 300 m³/h mit Prüfstaub AC-fine, und T(0,1 µm) ≥ 60 %, gemessen nach DIN 71460 @ 300 m³/h mit NaCl als Prüfaerosol auf. Die erfindungsgemäße Filteranordnung zeichnet sich durch eine optimierte Dieselabgas-Abscheidung und insbesondere durch eine deutlich verbesserte Geruchsreduzierung bei Dieselgerüchen aus.

## Beschreibung

### Technisches Gebiet

Die Erfindung betrifft eine Filteranordnung, insbesondere zur Filterung der Autoinnenraum-Zuluft, umfassend wenigstens einen partikelfilternden Bereich und wenigstens einen chemischen Filterbereich , wobei der chemische Filterbereich einen Aktivkohlefilter umfasst.

### Stand der Technik

Dieselgeruch ist in der Kraftfahrzeug-Filter-Anwendung, insbesondere bei der Filterung der einem Autoinnenraum zugeführten Zuluft, als der charakteristische "Störgeruch" bekannt. Obwohl Dieselgeruch schon in kleinsten Konzentrationen wahrgenommen und als höchst unangenehm empfunden wird, sind die heute im Kraftfahrzeugbereich für die Autoinnenraumzuluftfilterung üblicherweise eingesetzten Filter und Filteranordnungen hinsichtlich der Filterung von Dieselgeruch noch unzureichend.

### Darstellung der Erfindung

Aufgabe der Erfindung ist, einen Filter bereitzustellen, der hinsichtlich der Dieselabgas-Abscheidung optimiert ist, und insbesondere zu einer deutlichen Reduzierung von Dieselgerüchen führt.

Diese Aufgabe wird gelöst mit einer Filteranordnung mit allen Merkmalen des Patentanspruchs 1. Vorteilhafte Ausgestaltungen der Erfindung sind in den Unteransprüchen beschrieben.

Gemäß der Erfindung wird bei einer Filteranordnung, die insbesondere zur Filterung der Autoinnenraum-Zuluft einsetzbar ist und wenigstens einen partikelfilternden Bereich und wenigstens einen chemischen Filterbereich umfasst, wobei der chemische Filterbereich einen Aktivkohlefilter umfasst, der partikelfilternde Bereich so ausgelegt, dass er eine anfängliche (d.h. bei Erstinbetriebnahme), Filtereffizienz von T(0,3 µm) ≥ 90 %, gemessen nach DIN 71460/1 @ 300 m³/h mit Prüfstaub AC-fine, und T(0,1 µm) ≥ 60 %, gemessen nach DIN 71460 @ 300 m³/h mit NaCl als Prüfaerosol, aufweist. Es hat sich in überraschender Weise gezeigt, dass offensichtlich nicht nur die gasförmigen Dieselabgase, sondern auch die im Dieselabgas vorhandenen submikronen Partikel (< 2,5µm; luftgetragene Dieselrußpartikel haben haben ihr Anzahlverteilungsmaximum bei ca. 0,1 - 0,3 µm) als Geruchsträger agieren, so dass eine Verbesserung der Abscheideleistung eines Filters gegenüber diesen Partikeln in Kombination mit einem an sich bekannten Aktivkohlefilter, so wie es die vorliegende Erfindung vorschlägt, zu einer erheblich verbesserten Geruchsreduzierung von Dieselgerüchen verglichen mit bekannten Filtern bzw. Filteranordnungen führt.

Die Geruchsreduzierung wird zusätzlich noch dadurch verbessert, dass die Aktivkohle des Aktivkohlefilters zur Eliminierung saurer Gase in an sich bekannter Weise chemisch imprägniert ist. Es hat sich gezeigt, dass gerade die im Dieselabgas vorhandenen sauer reagierenden Gase in erheblichem Maße für die starke Geruchsausbildung mitverantwortlich sind. Geeignete Stoffe und Verfahren zur Imprägnierung der Aktivkohle zur Eliminierung saurer Gase sind im Stand der Technik bekannt und werden daher hier nicht weiter diskutiert. Zusätzlich kann die erfindungsgemäße Filteranordnung noch Aktivkohlefilterbereiche aufweisen, die katalytisch oder basisch ausgerüstet sind. Soweit zusätzlich noch andere adsorbierende Materialien als Aktivkohle zur Anwendung kommen, können auch diese, wie oben beschrieben, sauer, basisch und/oder katalytisch ausgerüstet sein.

Vorteilhafterweise ist die erfindungsgemäße Filteranordnung als Kombifilter ausgebildet. Hierunter versteht man Filteranordnungen, bei denen sich das Filtermaterial aus wenigstens einer partikelfilternden Lage und wenigstens einer Lage aus einem chemischen Filtermaterial , beispielsweise Aktivkohle, zusammensetzt.

In einer bevorzugten Ausführungsform der Erfindung sind der partikelfilternde Bereich und/oder der chemische Filterbereich als Vliesstofffilter ausgebildet. sind. Eine Verbesserung der Diesetrußpartiketabscheidung lässt sich dabei in einfacher Weise dadurch erreichen, dass das Partikelfiltermaterial Mikrofasern umfasst, wobei der Einsatz von Mikrofasern für die gewünschte Wirkung allerdings nicht zwingend ist.

Eine weitere Verbesserung der Dieselrußpartikelabscheidung ist auch dadurch erzielbar, dass der Vliesstoff in an sich bekannter Weise Bereiche mit elektrostatischer Aufladung umfasst.

Eine erfindungsgemäße Filteranordnung kann neben dem partikelfilternden Bereich und dem Aktivkohlefilterbereich noch weitere Filterbereiche umfassen, die beispielsweise jeweils auf die Abscheidung bestimmter Schadstoffe im Diesel-abgas spezialisiert sein können. So kann beispielsweise der partikelfilternde Bereich mehrere Lagen, die unterschiedliche Partikelgrößen filtern, umfassen. Der Übergang zwischen diesen Bereichen kann stufenartig oder als Gradient ausgebildet sein. Neben dem Aktivkohlefilterbereich können noch weitere Bereiche vorgesehen sein, die mit bestimmten Schadgasarten chemische Reaktionen eingehen.

Vorzugsweise wird eine erfindungsgemäße Filteranordnung für die Filterung der Zuluft für den Innenraum in Kraftfahrzeugen eingesetzt. Darüber hinaus ist aber auch der Einsatz in Geräten zum Klimatisieren von Räumen denkbar, wobei sowohl mobile als auch stationäre Anwendungen in Betracht zu ziehen sind. Ein weiteres bevorzugtes Einsatzgebiet ist die Luftfilterung in Räumen, in denen Dieselfahrzeuge, beispielsweise Gabelstapler, zum Einsatz kommen. Die vorliegende Erfindung ist jedoch nicht auf die genannten Einsatzgebiete beschränkt.

Im Folgenden werden beispielhaft mehrere unterschiedliche Filteraufbauten für eine erfindungsgemäße Filteranordnung vorgestellt, die die Vorgaben nach Patentanspruch 1 erfüllen. Man erkennt, dass eine erfindungsgemäße Filteranordnung auf unterschiedlichste Art und Weise realisiert werden kann. Es handelt sich hierbei ohne Beschränkung der Allgemeinheit jeweils um Kombifilter aus Vliesstoff:
Der Aktivkohlefilterbereich kann beispielsweise wie folgt aufgebaut sein:
   Körnige Aktivkohle mit (20x 150 mesh) oder aber auch kugelförmige Aktivkohle oder Flächengebilde (sowohl Webwaren als auch Wirk- und Strickwaren) aus Aktivkohlefasern mit einem Flächengewicht von 150 - 450 g/m², unimprägniert oder imprägniert gegen saure und/oder basische Gase, auf einem Träger aus PP(Polypropylen) oder PES(Polyester) mit einem Flächengewicht von 20 - 60 g/m².

Der partikelfilternde Bereich kann wie folgt aufgebaut sein:
a) 2- oder 3-lagig mit einem Vorfilter aus einem Polyolefin oder PES mit/ohne elektrostatischer Aufladung mit einem Flächengewicht von 40 - 120 g/m² und einem Faserdurchmesser von 20 - 50 µm,
   einer weiteren Filterlage aus Polyolefin- oder PC(Polycarbonat)-Mikrofasern mit elektrostatischer Aufladung und einem Flächengewicht von 5 - 30 g/m² und einem Faserdurchmesser von 1 - 10 µm
   sowie optional mit einer Polyolefin- oder PES-Abdecklage mit/ohne elektrostatischer Aufladung und einem Flächengewicht von 10-50g/m² und einem Faserdurchmesser von 20 - 50 µm.
b) 2 - oder 3 -lagig mit einem Träger aus Polyolefin oder PES mit/ohne elektrostatischer Aufladung, einem Flächengewicht von 40 - 180 g/m² und einem Faserdurchmesser von 20 - 50 µm,
   einer weiteren Filterlage aus einer Polyolefin/Polyacrylnitril-Fasermischung, triboelektrisch geladen, mit einem Flächengewicht von 10 - 100 g/m² und einem Faserdurchmesser von 5 - 30 µm
   sowie optional mit einer Abdecklage aus einem Polyolefin oder PES mit/ohne elektrostatischer Aufladung und einem Flächengewicht von 10 - 50 g/m² und einem Faserdurchmesser von 20 - 50 µm.
c) 1-lagig mit einer Filterlage aus einer Polyolefin/Polyacrylnitril-Fasermischung, triboelektrisch geladen mit einem Flächengewicht von 10 - 150 g/m² und einem Faserdurchmesser von 5 - 30 µm.
d) 1-lagig mit einer Filterlage aus PES, mit/ohne elektrostatischer Aufladung, einem Flächengewicht von 40 -180 g/m² und einem Faserdurchmesser von 20 - 50 µm.
e) 1-lagig mit einer Filterlage aus Polyolefin-, PES- oder PC-Mikrofasern mit einem Flächengewicht von 5 - 30 g/m² und einem Faserdurchmesser von 1 - 10 µm.

### Ausführungsbeispiele:

Zum Nachweis der erfindungsgemäßen Wirkung wurden Vergleichsmessungen an einem erfindungsgemäß ausgebildeten Kombifilter (Dieselfilter) sowie an einem handelsüblichen Standardkombifilter durchgeführt.

In einer ersten Messung wurde der Dieselgeruch für eine Anordnung ohne Filter (Dieselrohgas-Probe), für den oben erwähnten Standardkombifilter sowie für den erfindungsgemäß ausgebildeten Kombifilter (Dieselfilter) bestimmt. Zum Vergleich wurde auch der Dieselgeruch für einen Partikelfilter alleine, der in seinem Aufbau dem partikelfilterenden Bereich des oben erwähnten erfindungsgemäßen Kombifilters entsprach, ermittelt. Die Geruchsmessung wurde nach DIN 13725 durchgeführt. Die Messproben wurden wie folgt gewonnen: Aus dem jeweiligen Filterelement wurde jeweils eine Ronde mit einem Durchmesser von 60 mm ausgestanzt. Diese wurde in eine Glasfritte eingesetzt und zu den Rändern hin abgedichtet. Anschließend wurde die Rohgasprobe über die Glasfritte angesaugt und durch das Filtermedium in

einen Beutel gezogen. Dabei stellten sich Strömungsgeschwindigkeiten von ca. 0,1 m/s ein. Diese sind in etwa mit den Strömungsgeschwindigkeiten vergleichbar, die in einer Kraftfahrzeuggebläseeinheit vorherrschen. Die Geruchsmessung erfolgte dann durch einen olfaktometrischen Prüfstand der der DIN EN 13725-Norm entspricht.

Als Messaerosol wurde Dieselabgas aus einem handelsüblichen modernen Turbo-Dieselmotor, Hubraum 1,9 1, im Lerrlaufbetrieb bei normaler Betriebstemperatur (wird nach ca. 10 Min. Betrieb erreicht) verwendet.

Der erfindungsgemäßen Kombifilter (Dieselfilter) bzw. der Partikelfilter waren wie folgt aufgebaut:
Es wurde bei beiden Filtern jeweils ein 3-lagiger Partikelfilter gemäß dem Ausführungsbeispiel a) eingesetzt. Der Partikelfilter wies einen Vorfilter aus PP mit elektrostatischer Aufladung und einem Flächengewicht von 115 g/m² und einem Faserdurchmesser von ca. 40 µm auf. Eine weitere Filterlage umfasste PP-Mikrofasern mit elektrostatischer Aufladung, einem Flächengewicht von 20 g/m² und einem Faserdurchmesser von ca. 5 µm . Die Decklage bestand aus PP mit elektrostatischer Aufladung, einem Flächengewicht von 15 g/m² und einem Faserdurchmesser von 30 µm.

Beim erfindungsgemäßen Kombifilter (Dieselfilter) kam weiterhin als chemischer Filterbereich körnige Aktivkohle (30x60mesh) zum Einsatz mit einem Flächengewicht von 350g/m² , die gegen saure Gase imprägniert und auf einem Träger aus PES mit einem Flächengewicht von 50 g/m² aufgebracht war.

Der Standardfilter war wie folgt aufgebaut: 1-lagiger Partikelfilter mit einer Filterlage aus aus Polypropylen(PP) mit elektrostatischer Aufladung, einem Flächengewicht von 60 g/m² und einem Faserdurchmesser von ca. 30 µm. Der Partikelfilter ist mit einer chemischen Filterschicht kombiniert. Diese chemische Filterschicht besteht aus körniger, unimprägnierter Aktivkohle (30x60mesh) mit einem Flächengewicht von 350g/m² ; diese war auf einen Träger aus PES mit einem Flächengewicht von ca. 50g/m² aufgebracht.

In einer weiteren Messung wurde die Dieselpartikelabscheidung des erfindungsgemäßen Kombifilters (Dieselfilter) der des Standardfilters gegenübergestellt. Die Messungen erfolgten gemäß nach DIN 71460/1 @ 300 m³/h mit Prüfstaub AC-fine und in Anlehnung an DIN 71460 @ 300 m³/h mit Prüfaerosol NaCl.

Die Ergebnisse der obigen Messungen sind in den Figuren dargestellt.

Es zeigen:
- Figur 1:: eine graphische Darstellung der Ergebnisse der oben beschriebenen Geruchsmessung;
- Figur 2:: eine graphische Darstellung der Ergebnisse der oben beschriebenen Messung der Dieselrußpartikelabscheidung;

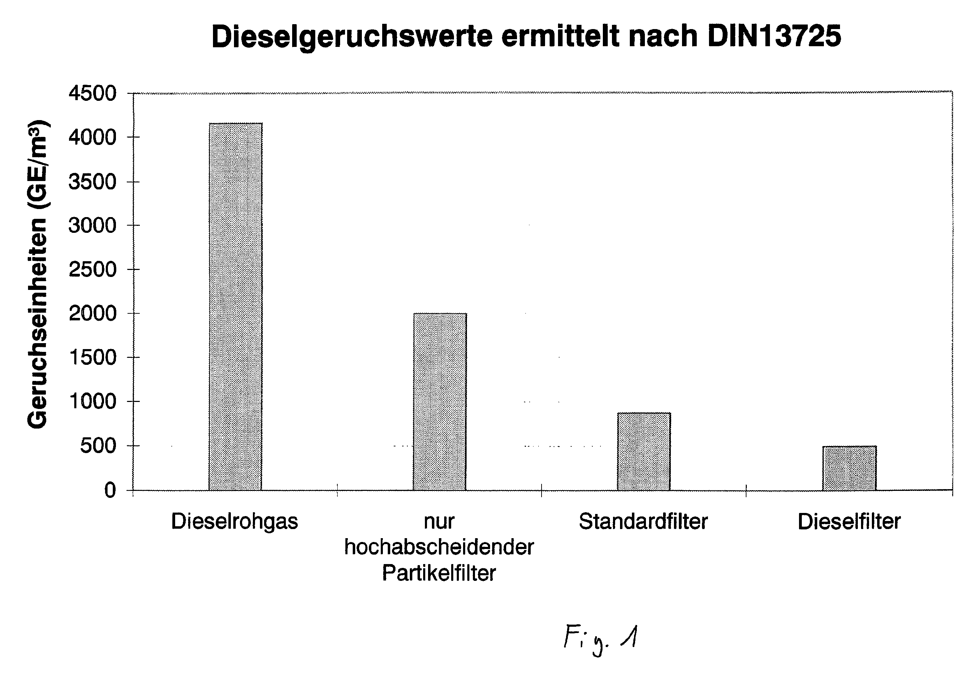

Fig. 1 zeigt die Ergebnisse der Geruchsmessung an einer Dieselrohgas-Probe, dem oben erwähnten Partikelfilter, dem Standardfilter sowie dem erfindungsgemäßen Kombifilter (Dieselfilter). Die Geruchswerte sind in Einheiten GE(Europäische Geruchseinheit)/m³ dargestellt, wobei die (Europäische Geruchseinheit) nach DIN EN 13725 Kap. 3.3 definiert ist.

Man erkennt, dass schon der Partikelfilter alleine zu einer wesentlichen Geruchsreduzierung gegenüber der Anordnung ohne Filter (Dieselrohgas-Probe) führt. Dies bestätigt die aus der vorliegenden Erfindung resultierende Annahme, dass die Dieselrußpartikel ebenfalls als Geruchsträger fungieren. Bei Verwendung des Standardfilters tritt eine weitere deutliche Geruchsreduzierung ein. Die besten Werte werden mit dem erfindungsgemäßen Kombifilter (Dieselfilter) erzielt.

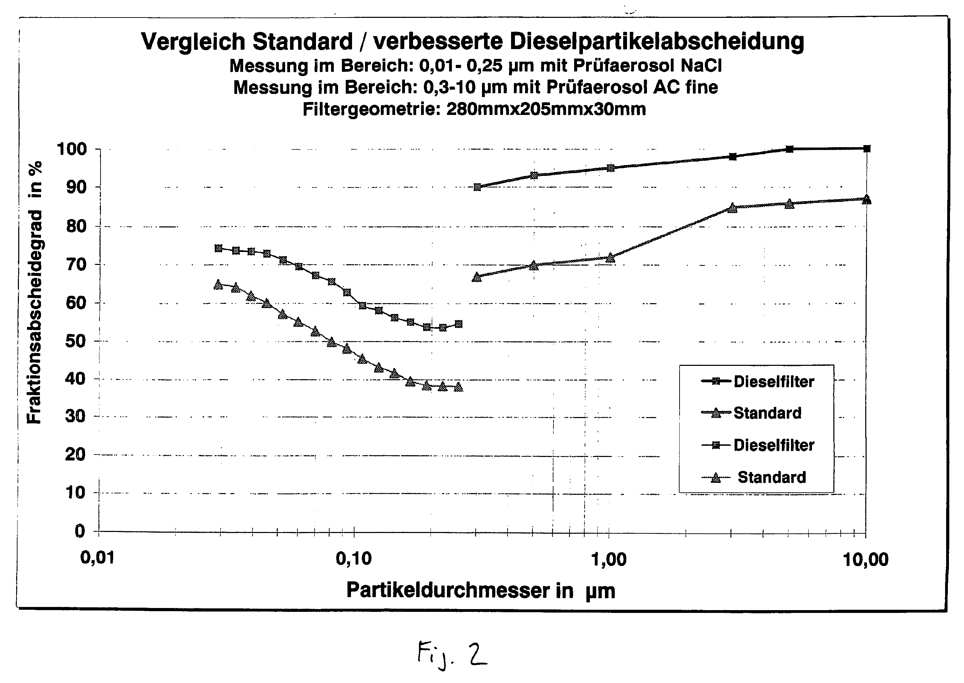

In Fig. 2 ist der Verlauf des Fraktionsabscheidegrads in % in Abhängigkeit vom Partikeldurchmesser sowohl für den erfindungsgemäßen Kombifilter (Dieselfilter) als auch für den Standardfilter dargestellt. Auch hier erkennt man eine deutliche Überlegenheit des erfindungsgemäßen Kombifilters (Dieselfilter) gegenüber dem herkömmlichen Standardfilter. Für den erfindungsgemäßen Kombifilter wurden Werte T(0,3µm) ≥ 90 % und T(0,1 µm) ≥ 60 %, ermittelt. Beim Standardfilter lag T(0,3 µm) deutlich unterhalb von 70 % und T(0,1) sogar unterhalb von 50 %. Hierbei ist zu beachten, dass die verbesserte Partikelabscheidung des erfindungsgemäßen Kombifilters (Dieselfilter) nicht nur zu einer deutlichen Geruchsreduzierung bei den Dieselgerüchen führt, sondern dass hieraus insbesondere auch eine erhebliche Verringerung der gesundheitlichen Belastung durch Dieselrußpartikel resultiert. Dieselrußpartikel werden aufgrund ihrer lungengängigen Partikelgröße (PM 2,5 = Partikel kleiner 2,5 µm) als mögliche Ursache für Gesundheitsbeeinträchtigungen angesehen.

## Patentansprüche

1. Filteranordnung, insbesondere zur Filterung der Autoinnenraum-Zuluft, umfassend wenigstens einen partikelfilternden Bereich und wenigstens einen chemischen Filterbereich, wobei der chemische Filterbereich einen Aktivkohlefilter umfasst, **dadurch gekennzeichnet, dass** der partikelfilternde Bereich eine Filtereffizienz von T(0,3 µm) ≥ 90 %, gemessen nach DIN 71460/1 @ 300 m³/h mit Prüfstaub AC-fine, und T(0,1 µm) ≥ 60 %, gemessen nach DIN 71460 @ 300 m³/h mit NaCl als Prüfaerosol, aufweist.

2. Filteranordnung nach Anspruch 1, **dadurch gekennzeichnet, dass** die Aktivkohle zur Erhöhung der Adsorption saurer Gase in an sich bekannter Weise imprägniert ist.

3. Filteranordnung nach Anspruch 1 oder 2, **dadurch gekennzeichnet, dass** der Filter als Kombifilter ausgebildet ist.

4. Filteranordnung nach einem der Ansprüche 1 bis 3, **dadurch gekennzeichnet, dass** der partikelfilternde Bereich und/oder der chemische Filterbereich als Vliesstofffilter ausgebildet sind.

5. Filteranordnung nach Anspruch 4, **dadurch gekennzeichnet, dass** der Vliesstoff Mikrofasern umfasst.

6. Filteranordnung nach Anspruch 4 oder 5, **dadurch gekennzeichnet, dass** der Vliesstoff Bereiche mit elektrostatischer Aufladung umfasst.
